# EUROPÄISCHE PATENTSCHRIFT

(11) **EP 2 147 960 B1**
(45) Veröffentlichungstag und Bekanntmachung des Hinweises auf die Patenterteilung: **19.06.2013**
(21) Anmeldenummer: 09164288.4
(22) Anmeldetag: 01.07.2009
(51) Int. Cl.: C09J 153/02, C08F 8/00, C08L 53/02

(54) **Klebmasse für reversible UV-stabile Haftklebebänder**
Adhesive mass for reversible UV-stable adhesive bands
Masse adhésive pour bandes adhésives à UV stables réversibles

(30) Priorität: 23.07.2008 DE 102008034369
(43) Veröffentlichungstag der Anmeldung: 27.01.2010
(73) Patentinhaber: tesa SE, 20253 Hamburg (DE)
(72) Erfinder: Krawinkel, Dr. Thorsten, 22457, Hamburg (DE)

(56) Entgegenhaltungen:
- EP-A- 1 347 028
- WO-A-2008/018445
- US-A- 5 292 820
- US-A1- 2002 147 274
- US-A1- 2004 092 663

## Beschreibung

Die Erfindung betrifft eine Haftklebemasse auf der Basis von Vinylaromatenblockcopolymeren, die insbesondere für wiederablösbare UV-stabile Klebebänder eingesetzt werden kann.

Einseitige oder doppelseitige Klebebänder, die auch für den Außenbereich einsetzbar sind, sind in vielfältiger Art und Weise beschrieben.

Üblicherweise werden hierfür entweder UV-undurchlässige Träger eingesetzt oder Klebmassen, die gegenüber UV-Licht stabil sind. Im ersteren Fall kann das UV-Licht immer noch an den Kanten des Klebebandes die Masse angreifen und hier zu Schädigungen der Klebmasse führen. Bei einem Wiederablösen des Klebebandes verbleiben dann häufig ungewünschte Rückstände auf dem Untergrund.

Als UV-stabile Klebmassen kommen vor allem Acrylate, Massen auf Basis von Silikonen oder Polyisobutylen zum Einsatz. Alle diese Klebmassen haben ihre spezifischen Nachteile.

Acrylatmassen sind sehr gut in der UV-Resistenz, besitzen aber sehr unterschiedliche Klebkräfte auf verschiedenen Untergründen. Während die Klebkraft auf polaren Untergründen wie Glas oder Metall sehr hoch ist, ist die Klebkraft auf unpolaren Untergründen wie beispielsweise Polyethylen oder Polypropylen eher gering.

Silikonklebmassen sind zwar sehr gut für reversible Außenanwendungen geeignet, doch ihr hoher Preis limitiert die möglichen Einsatzgebiete dramatisch, weshalb sie nur für sehr spezielle Aufgaben zum Einsatz kommen.

Klebmassen auf der Basis von Polyisobutylen haben eine recht geringe Kohäsion, weshalb sie beim Wiederablösen häufig Masserückstände auf dem Untergrund hinterlassen.

Andere Klebmassen wie solche auf Basis von Naturkautschuk eignen sich nicht, da sie durch das UV-Licht stark geschädigt werden. Der Einsatz von Füllstoffen und UV-Absorbern kann hier zwar eine Verbesserung erbringen, in den meisten Fällen ist die UV-Resistenz aber trotzdem noch nicht ausreichend.

Klebmassen auf der Basis von Vinylaromatenblockcopolymeren haben sich als vorteilhaft erwiesen, wenn es um die Verklebung auf unpolaren Untergründen geht. Diese Klebmassen haben den Vorteil, auf unterschiedlichen Untergründen eine ähnliche Klebkraft zu besitzen und nur mäßig auf den Untergrund aufzuziehen, wodurch ein Wiederablösen nach Gebrauch auch nach längerer Verklebungsdauer möglich ist, wenn die Klebkraft nicht zu hoch eingestellt ist.

Durch die in den hauptsächlich eingesetzten Vinylaromatenblockcopolymeren auf Basis von SIS (Styrol-Isopren-Styrol) und SBS (Styrol-Butadien-Styrol) vorhandenen Doppelbindungen sind Klebmassen auf dieser Basis nicht alterungsstabil.

Wohl lassen sich den verwendeten Haftklebemassen Alterungsschutzmittel in Form von zum Beispiel primären Antioxidantien, sekundären Antioxidantien, C-Radikalfängern, Lichtschutzmitteln wie zum Beispiel UV-Absorbern, sterisch gehinderten Aminen oder die schädigende elektromagnetische Strahlung reflektierenden oder streuenden Additiven zum Beispiel in Form von Füllstoffen und/oder Farbpigmenten zusetzen, jedoch bewirken entsprechende Zusätze zumeist nur eine graduelle Verbesserung der Alterungsstabilität, so dass Alterungsprozesse lediglich für eine begrenzte Zeit herausgezögert werden.

Im Vergleich zu Polymeren auf Basis ungesättigter Kohlenwasserstoffe bleibt die erreichte Alterungsstabilität, insbesondere die realisierte UV-Stabilität jedoch gering.

Eine Möglichkeit zur Erhöhung der Alterungsbeständigkeit und insbesondere der UV-Stabilität bei Nutzung von Vinylaromatenblockcopolymeren besteht im Einsatz von im Elastomerblock hydrierten Vinylaromatenblockcopolymeren, wie es zum Beispiel in Styrol-Ethylen/Butylen-Styrol- (SEBS; erhalten durch Hydrierung von SBS) und/oder Styrol-Ethylen/Propylen-Styrol- (SEPS; erhalten durch Hydrierung von SIS) Blockcopolymeren verwirklicht ist.

Nachteil des Einsatzes entsprechender im Elastomerblock hydrierter Vinylaromatenblockcopolymere ist jedoch, dass die mit selbigen zu realisierenden Verklebungsfestigkeiten erfahrungsgemäß deutlich unterhalb derer liegen, welche mit den analogen nicht im Elastomerblock hydrierten Styrol-Butadien-Styrol- und Styrol-Isopren-Styrol-Blockcopolymeren erreicht werden. Insbesondere die Anfassklebrigkeit ist recht gering. Neben dem subjektiven Empfinden des Verbrauchers, dass ein Klebeband mit geringer Anfassklebrigkeit auch nicht ordentlich kleben kann, verkleben Klebebänder mit derartigen Haftklebmassen nur ungenügend auf rauen Untergründen, wie sie im Außenbereich häufig anzutreffen sind. Eine Verbesserung durch die Verwendung von sehr weichen Elastomeren mit niedrigem Vinylaromatengehalt und hohem Zweiblockgehalt führt zu Klebmassen, die schon bei moderaten Temperaturen von 50 bis 60°C deutlich an Kohäsion verlieren und zum Versagen neigen.

Verbesserungen bringen hier Vinylaromatenblockcopolymere mit einem hohen Anteil an 1,2-verknüpftem Dien, bei denen diese 1,2-verknüpften Doppelbindungen hydriert wurden, während die Doppelbindungen in der Polymerkette erhalten bleiben. Diese Polymere, angeboten zum Beispiel von Asahi Chemicals unter dem Handelsnamen Tuftec P zeigen eine deutlich verbesserte UV- und Alterungsstabilität gegenüber nicht hydrierten Vinylaromatenblockcopolymeren aber gleichzeitig auch bei geeigneter Abmischung mit Klebharzen eine verbesserte Anfangsklebrigkeit gegenüber vollständig hydrierten Blockcopolymeren. Zudem ist die Verträglichkeit mit einer Reihe von Klebharzen gegenüber vollständig hydrierten Blockcopolymeren deutlich gesteigert. Trotz der Verbesserung der Alterungs- und UV-Stabilität solcher Systeme befinden sich immer noch Doppelbindungen in der Polymerhauptkette, die mit UV-Licht reagieren können. Gewünscht ist eine weitere Verbesserung der Alterungsstabilität über die Performance der genannten teilhydrierten Blockcopolymere hinaus.

Die EP 2 050 773 A1 (WO 2008/018445 A1) beschreibt Blockcopolymere mit mindestens 5 Blöcken, zwei Vinylaromatenblöcken, zwei Dienblöcken, die nur zum Teil hydriert sind, und mindestens einen Block, der fast vollständig hydriert ist. Eine Mischung aus einem hydrierten und einem nicht hydrierten Elastomer ist nicht gezeigt.

US 2004 0092663 beschreibt Klebemasse auf Basis von hydrierten Blockcopolymeren, und eine Verwendung in Haftklebeband.

Aufgabe der Erfindung ist es daher, eine reversible Klebmasse mit hoher Resistenz gegenüber UV-Licht zu finden, die auf unterschiedlichen Untergründen ähnliche Klebkräfte wie die bekannten Klebemassen aufweist.

Gelöst wird diese Aufgabe durch eine Klebemasse, wie sie im Hauptanspruch niedergelegt ist. Gegenstand der Unteransprüche sind dabei vorteilhafte Weiterbildungen der Klebemasse sowie die Verwendung der Klebemasse zur Bildung eines Haftklebebandes.

Überraschenderweise eignen sich Klebmassen auf Basis von Gemischen von teilhydrierten Blockcopoylmeren und vollständig hydrierten Polymeren sehr gut für die genannte Anwendung. Die Klebmassen zeigen eine ausreichende Stabilität gegenüber UV-Licht, haben aber noch genügend Klebkraft und Anfassklebrigkeit, um auch auf rauen und unpolaren Untergründen eingesetzt werden zu können.

Demgemäß betrifft die Erfindung eine Klebemasse für ein Haftklebeband bestehend aus
- mindestens einem Blockcopolymer P1 mit einem oder mehreren endständigen Blöcken bestehend aus Vinylaromaten und mindestens einem Block bestehend aus konjugierten Dienen, bei dem die endständigen Doppelbindungen, entstanden durch 1,2-Verknüpfung, zu mehr als 80 % hydriert sind, während die Doppelbindungen in der Hauptkette, entstanden durch 1,4-Verknüpfung, zu weniger als 30 % hydriert sind, und
- mindestens einem Blockcopolymer P2 mit einem oder mehreren endständigen Blöcken bestehend aus Vinylaromaten und mindestens einem Block bestehend aus konjugierten Dienen, bei dem mindestens 95 % der Doppelbindungen hydriert sind.

In einer ersten vorteilhaften Ausführungsform weisen die Blockcopolymere einen Polyvinylaromatenanteil von 10 Gew.-% bis 35 Gew.-% auf.

In einer weiteren vorteilhaften Ausführungsform beträgt der Anteil der beiden Vinylaromatenblockcopolymere in Summe bezogen auf die gesamte Klebmasse 20 bis 70 Gew.-%, bevorzugt 30 bis 60 Gew.-%, ganz besonders bevorzugt 35 bis 55 Gew.-%.

Bei der Herstellung von Blockcopolymeren auf der Basis von Vinylaromaten, bevorzugt Styrol und 1,3-Dienen, besonders Isopren und Butadien, werden im Dienblock die Diene sowohl 1,2- als auch 1,4-verknüpft eingebaut. Der Anteil an 1,2-verknüpften Dienen kann durch das Lösungsmittel, die Temperatur oder den Katalysator gesteuert werden. Da die 1,2-vernüpften Diene eine endständige Doppelbindung enthalten, während die Doppelbindung bei den 1,4-verknüpften Dienen in der Hauptkette liegt, ist eine selektive Hydrierung der endständigen und damit reaktiveren Doppelbindungen möglich.

Als Blockcopolymere kommen solche Polymere zum Einsatz, die zum einen Blöcke aus Vinylaromaten (A-Blöcke) wie zum Beispiel Styrol und zum anderen solche gebildet durch Polymerisation von 1,3-Dienen (B-Blöcke) wie zum Beispiel Butadien und Isopren oder einer Mischung aus beiden besitzen. Dabei sind die B-Blöcke so polymerisiert, dass sie einen hohen Anteil an Vinylgruppen durch eine 1,2-Verknüpfung von über 20 % besitzen, die im Gegensatz zu den Doppelbindungen in der Hauptkette hydriert sind. Wenn das nichthydrierte Blockcopolymer ein SBS ist, entsteht nach der selektiven Hydrierung ein so genanntes SBBS (Styrol-Butadien/Butylen-Styrol). Da die Selektivität der Hydrierung nicht 100 % ist, können Blockcopolymere zum Einsatz kommen, dessen vinylische Doppelbindungen, entstanden durch 1,2-Verknüpfung, zu mehr als 80 % hydriert sind, während die Doppelbindungen in der Hauptkette nur zu maximal 30 % hydriert sind.

Als zweite Komponente kommen Blockcopolymere zum Einsatz, die zum einen Blöcke aus Vinylaromaten (A-Blöcke) wie zum Beispiel Styrol und zum anderen solche gebildet durch Polymerisation von 1,3-Dienen (B-Blöcke) wie zum Beispiel Butadien und Isopren oder einer Mischung aus beiden besitzen, wobei die gesamten Doppelbindungen der B-Blöcke zu einem Anteil von über 95 % hydriert sind.

Die Blockcopolymere können lineare A-B-A Struktur aufweisen. Einsetzbar sind ebenfalls Blockcopolymere von radialer Gestalt sowie sternförmige und lineare Multiblockcopolymere. Als weitere Komponente können A-B-Zweiblockcopolymere eingesetzt werden.

Anstelle der bevorzugten Polystyrolblöcke können auch Polymerblöcke auf Basis anderer aromatenhaltiger Homo- und Copolymere (bevorzugt C₈- bis C₁₂-Aromaten) mit Glasübergangstemperaturen von größer ca. 75 °C genutzt werden wie zum Beispiel α -methylstyrolhaltige Aromatenblöcke.

Die beiden Elastomere, zum einen teilhydriert P1 und zum anderen zu mindestens 95 % hydriert P2, liegen erfindungsgemäß in einem Verhältnis (Gewichtsanteile) von 25:75 bis zu einem Verhältnis von 90:10 vor, bevorzugt im Bereich von 40:60 und 80:20.

Als Klebrigmacher dienen Klebharze, die mit dem Elastomerblock der Vinylaromatenblockcopolymere verträglich sind. Geeignete Klebharze sind unter anderem vorzugsweise nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen, oder Polyterpenharze auf Basis von α-Pinen und/oder β-Pinen und/oder δ-Limonen. Vorgenannte Klebharze können sowohl allein als auch im Gemisch eingesetzt werden.

Dabei können sowohl bei Raumtemperatur feste als auch flüssige Harze zum Einsatz kommen.

Um eine hohe Alterungs- und UV-Stabilität zu gewährleisten, sind hydrierte Harze bevorzugt.

Als weitere Additive können typischerweise genutzt werden:
- Plastifizierungsmittel wie zum Beispiel Weichmacheröle oder niedermolekulare flüssige Polymere wie zum Beispiel niedermolekulare Polybutene
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Füllstoffe wie Fasern, Ruß, Zinkoxid, Titandioxid, Mikrovollkugeln, Voll- oder Hohlglaskugeln, Kieselsäure, Silikaten, Kreide
- Verarbeitungshilfsmittel
- Endblockerstärkerharze sowie
- gegebenenfalls weitere Polymere von bevorzugt elastomerer Natur; entsprechend nutzbare Elastomere beinhalten unter anderem solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine, um nur einige wenige zu nennen.

Erfindungsgemäß ist es auch, wenn die Klebemasse alle die genannten Zuschlagstoffe jeweils nicht aufweist.

Die beschriebenen Klebmassen können sowohl in einseitigen als auch in doppelseitigen Klebebändern zum Einsatz kommen. Dabei sind für die verschiedenen Anwendungen unterschiedlichste Träger wie zum Beispiel Folien, Gewebe, Vliese und Papiere mit den Klebmassen kombinierbar.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

### Herstellung der Haftklebemassen

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Die so hergestellten Haftklebmassen können dann mit den allgemein bekannten Verfahren auf den Träger gebracht werden. Bei Verarbeitung aus der Schmelze können dies Auftragsverfahren über eine Düse oder einen Kalander sein.

Bei Verfahren aus der Lösung sind Beschichtungen mit Rakeln, Messern oder Düsen bekannt, um nur einige wenige zu nennen.

Im Folgenden wird die Erfindung durch einige Beispiele näher erläutert.

### Beispiele

### Prüfmethoden

### Klebkraft

Die Bestimmung der Klebkraft wurde wie folgt durchgeführt: Als definierter Haftgrund wurden eine Stahlfläche, eine Polyethylenfläche (PE) und ein Sandpapier der Körnung 300 eingesetzt. Das zu untersuchende verklebbare Flächenelement wurde auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das verklebbare Flächenelement in einem Winkel von 180° vom Haftgrund mit einem Zugprüfungsgerät (Firma Zwick) abgezogen und die hierfür bei Raumtemperatur benötigte Kraft gemessen. Der Messwert (in N/cm) ergab sich als Mittelwert aus drei Einzelmessungen.

Zudem wurde der gleiche Test durchgeführt, wobei die verklebten Proben 3 Tage bei 40 °C gelagert, anschließend auf Raumtemperatur konditioniert und dann wie oben beschrieben gemessen wurden.

### Tack

Der Tack wurde nach der Rolling Ball Methode bestimmt, bei der eine Stahlkugel mit einem Durchmesser von 11 mm von einer 65 mm hohen Rampe auf die Masseseite des Klebebandes rollt. Die zurückgelegte Wegstrecke ist ein Maß für die Anfassklebrigkeit. Je geringer dieser Wert ist, desto höher ist der Tack.

### UV-Test

Zur Messung der UV-Stabilität wurden die Muster in 20 mm Breite und 25 cm Länge auf eine Glasplatte mit einer Stärke von 4 mm verklebt und fünfmal mit einer 2 kg Rolle angerollt.

Von jedem Beispiel wurden so 15 Muster hergestellt.

Die Muster wurden mit der Glasseite nach oben in einer UV-Kammer mit Xenonlampe bei einer Bestrahlungsstärke von 500 W/m² gelagert. Jeden Tag wurde einer der Streifen pro Beispiel aus der UV-Kammer genommen und nach Konditionierung auf Raumtemperatur für 1 h von der Glasplatte abgezogen.

Dabei wurde registriert, ob es Klebmasserückstände auf der Glasplatte gab.

Allen Beispielen wurden als Alterungsschutzmittel 0,5 Teile Irganox 1010 und 0,5 Teile Tinuvin P als UV-Absorber zugesetzt.

**Vergleichsbeispiel C1**

| | | |
|---|---|---|
| 100 Teile | Vector 4113 | SIS mit 15 % Blockpolystyrolgehalt und ca. 20 % Zweiblockgehalt der Firma Dexco |
| 100 Teile | Escorez 5600 | Hydriertes KW-Harz mit einem Erweichungspunkt von 100 °C der Firma Exxon |
| 25 Teile | Ondina G 17 | Weißöl aus paraphinischen und naphtenischen Anteilen der Firma Shell |

**Vergleichsbeispiel C2**

| | | |
|---|---|---|
| 100 Teile | Kraton G 1657 | SEBS mit 13 % Blockpolystyrolgehalt und ca. 36 % Zweiblockgehalt der Firma Kraton |
| 100 Teile | Escorez 5600 | Hydriertes KW-Harz mit einem Erweichungspunkt von 100 °C der Firma Exxon |
| 25 Teile | Ondina G 17 | Weißöl aus paraphinischen und naphtenischen Anteilen der Firma Shell |

**Vergleichsbeispiel C3**

| | | |
|---|---|---|
| 100 Teile | Tuftec P 1500 | SBBS mit 30 % Blockpolystyrolgehalt und ca. 68% Zweiblockgehalt der Firma Asahi |
| 100 Teile | Escorez 5600 | Hydriertes KW-Harz mit einem Erweichungspunkt von 100 °C der Firma Exxon |
| 25 Teile | Ondina G 17 | Weißöl aus paraphinischen und naphtenischen Anteilen der Firma Shell |

**Beispiel 4**

| | | |
|---|---|---|
| 70 Teile | Tuftec P 1500 | SBBS mit 30 % Blockpolystyrolgehalt und ca. 68 % Zweiblockgehalt der Firma Asahi |
| 30 Teile | Kraton G 1657 | SEBS mit 13 % Blockpolystyrolgehalt und ca. 36 % Zweiblockgehalt der Firma Kraton |
| 100 Teile | Escorez 5600 | Hydriertes KW-Harz mit einem Erweichungspunkt von 100 °C der Firma Exxon |
| 25 Teile | Ondina G 17 | Weißöl aus paraphinischen und naphtenischen Anteilen der Firma Shell |

### Herstellung der Muster

Die Haftklebemassen wurden für die Beispiele aus Lösung hergestellt. Dazu wurden die einzelnen Bestandteile in Toluol gelöst (Feststoffanteil 40 %) und auf eine nicht behandelte PET-Folie so ausgestrichen und bei 120 °C für 15 Minuten getrocknet, dass eine Klebmasseschicht mit einem Flächengewicht von 60 g/m² entstand.

| Haftklebemasse Beispiel Nr. | Klebkraft auf Stahl in N/cm | | Klebkraft PE in N/cm | | Klebkraft Sandpapier in N/cm | | Tack in mm | Wiederablösbarkeit nach UV-Lagerung |
|---|---|---|---|---|---|---|---|---|
| | frisch | Nach 3 Tagen 40 °C | frisch | Nach 3 Tagen 40 °C | frisch | Nach 3 Tagen 40 °C | | |
| C1 | 10,7 | 12,9 | 6,8 | 8,3 | 1,6 | 3,1 | 25 | Rückstände vollflächig nach 3 Tagen |
| C2 | 4,2 | 5,6 | 3,6 | 4,3 | 0,5 | 1,1 | >300 | Keine Rückstände nach 15 Tagen |
| C3 | 7,3 | 8,3 | 5,1 | 6,6 | 1,2 | 2,5 | 92 | Rückstände am Rand nach 13 Tagen |
| 4 | 6,5 | 7,4 | 4,4 | 5,7 | 1,2 | 2,1 | 112 | Keine Rückstände nach 15 Tagen |

Wie zu erwarten, ist die UV-Stabilität bei Mustern mit SIS (C1) sehr gering, so dass es schon nach wenigen Tagen zu Masserückständen im UV-Test kommt. Anders sieht es hier bei den hydrierten Elastomeren aus. Allerdings zeigen auch die reinen SBBS-Massen (C3) hier noch einige Schwächen. Massen auf Basis von SEBS (C2) haben einen sehr geringen Tack und eine schlechte Haftung auf rauen Untergründen.

Dagegen sind die Eigenschaften bei einer Mischung aus SBBS und SEBS (4) besonders ausgewogen, so dass solche Massen für reversible Verklebungen auch unter UV-Licht einsetzbar sind.

## Patentansprüche

1. Klebemasse für ein Haftklebeband bestehend aus
• mindestens einem Blockcopolymer P1 mit einem oder mehreren endständigen Blöcken bestehend aus Vinylaromaten und mindestens einem Block bestehend aus konjugierten Dienen, bei dem die endständigen Doppelbindungen, entstanden durch 1,2-Verknüpfung, zu mehr als 80 % hydriert sind, während die Doppelbindungen in der Hauptkette, entstanden durch 1,4-Verknüpfung, zu weniger als 30 % hydriert sind, und
• mindestens einem Blockcopolymer P2 mit einem oder mehreren endständigen Blöcken bestehend aus Vinylaromaten und mindestens einem Block bestehend aus konjugierten Dienen, bei dem mindestens 95 % der Doppelbindungen hydriert sind.

2. Klebmasse nach Anspruch 1,
**dadurch gekennzeichnet, dass**
es sich bei den Vinylaromaten um Styrol handelt.

3. Klebmasse nach Anspruch 1 oder 2,
**dadurch gekennzeichnet, dass**
die beiden Blockcopolymere P1 und P2 in einem Verhältnis von 25:75 bis zu 90:10 Gewichtsanteilen vorliegen, bevorzugt in einem Verhältnis von 40:60 bis zu 80:20 Gewichtsanteilen.

4. Klebmasse nach zumindest einem der Ansprüche 1 bis 3,
**dadurch gekennzeichnet, dass**
es sich bei dem Blockcopolymer P1 um ein teilhydriertes Styrol-Butadien-Styrol-Blockcopolymer handelt.

5. Klebmasse nach zumindest einem der vorherigen Ansprüche,
**dadurch gekennzeichnet, dass**
der Polyvinylaromatenanteil der Blockcopolymere P1 und P2 jeweils zwischen 10 und 35 Gew.-% liegt.

6. Klebmasse nach zumindest einem der vorherigen Ansprüche,
**dadurch gekennzeichnet, dass**
der Anteil der beiden Vinylaromatenblockcopolymere in Summe bezogen auf die gesamte Klebmasse 20 bis 70 Gew.-%, bevorzugt 30 bis 60 Gew.-%, ganz besonders bevorzugt 35 bis 55 Gew.-% beträgt.

7. Klebmasse nach zumindest einem der vorherigen Ansprüche,
**dadurch gekennzeichnet, dass**
die Klebmasse auch Zweiblockcopolymere enthält.

8. Klebmasse nach zumindest einem der vorherigen Ansprüche,
**dadurch gekennzeichnet, dass**
die Klebmasse neben den Blockcopolymeren Klebharze enthält.

9. Klebmasse nach zumindest einem der vorherigen Ansprüche,
**dadurch gekennzeichnet, dass**
die Klebmasse zumindest ein UV-Schutzmittel enthält.

10. Klebmasse nach zumindest einem der vorherigen Ansprüche,
**dadurch gekennzeichnet, dass**
die Klebemasse weitere Abmischkomponenten enthält, insbesondere Weichmacher, Alterungsschutzmittel, Verarbeitungshilfsmittel, Füllstoffe, Farbstoffe, optische Aufheller, Stabilisatoren, Endblockverstärkerharze.

11. Verwendung einer Haftklebmasse nach zumindest einem der vorherigen Ansprüche in einem wiederablösbaren Klebeband für den Außenbereich.

## Claims

1. Adhesive for a pressure-sensitive adhesive tape, composed of
• at least one block copolymer P1 having one or more terminal blocks composed of vinylaromatics and at least one block composed of conjugated dienes, in which more than 80% of the terminal double bonds, formed by 1,2-linkage, are hydrogenated, while less than 30% of the double bonds in the main chain, formed by 1,4-linkage, are hydrogenated, and
• at least one block copolymer P2 having one or more terminal blocks composed of vinylaromatics and at least one block composed of conjugated dienes, in which at least 95% of the double bonds are hydrogenated.

2. Adhesive according to Claim 1, **characterized in that** the vinylaromatics comprise styrene.

3. Adhesive according to Claim 1 or 2, **characterized in that** the two block copolymers P1 and P2 are present in a ratio of 25:75 up to 90:10 weight fractions, preferably in a ratio of 40:60 up to 80:20 weight fractions.

4. Adhesive according to at least one of Claims 1 to 3, **characterized in that** the block copolymer P1 is a partly hydrogenated styrene-butadiene-styrene block copolymer.

5. Adhesive according to at least one of the preceding claims, **characterized in that** the polyvinylaromatic fraction of the block copolymers P1 and P2 is in each case between 10% and 35% by weight.

6. Adhesive according to at least one of the preceding claims, **characterized in that** the fraction of the two vinylaromatic block copolymers in total, based on the overall adhesive, is 20% to 70%, preferably 30% to 60%, more preferably 35% to 55% by weight.

7. Adhesive according to at least one of the preceding claims, **characterized in that** the adhesive also comprises diblock copolymers.

8. Adhesive according to at least one of the preceding claims, **characterized in that** the adhesive comprises tackifier resins in addition to the block copolymers.

9. Adhesive according to at least one of the preceding claims, **characterized in that** the adhesive comprises at least one UV protectant.

10. Adhesive according to at least one of the preceding claims, **characterized in that** the adhesive comprises further blend components, especially plasticizers, ageing inhibitors, processing assistants, fillers, dyes, optical brighteners, stabilizers, endblock reinforcer resins.

11. Use of a pressure-sensitive adhesive according to at least one of the preceding claims in a redetachable adhesive tape for the exterior sector.

## Revendications

1. Matière adhésive pour un ruban autoadhésif, à base
• d'au moins un copolymère séquencé P1 comportant une ou plusieurs séquences terminales consistant en des composés vinylaromatiques et au moins une séquence consistant en des diènes conjugués, dans lequel les doubles liaisons en bout de chaîne, formées par liaison-1,2, sont hydrogénées à raison de plus de 80 %, tandis que les doubles liaisons dans la chaîne principale, formées par liaison-1,4, sont hydrogénées à raison de moins de 30 %, et
• d'au moins un copolymère séquencé P2 comportant une ou plusieurs séquences terminales consistant en des composés vinylaromatiques et au moins une séquence consistant en des diènes conjugués, dans lequel au moins 95 % des doubles liaisons sont hydrogénées.

2. Matière adhésive selon la revendication 1,
**caractérisée en ce que**
les composés vinylaromatiques consistent en styrène.

3. Matière adhésive selon la revendication 1 ou 2,
**caractérisée en ce que**
les deux copolymères séquencés P1 et P2 sont présents en un rapport de 25:75 à 90:10 parties en poids, de préférence en un rapport de 40:60 à 80:20 parties en poids.

4. Matière adhésive selon au moins l'une quelconque des revendications 1 à 3,
**caractérisée en ce que**
le copolymère séquencé P1 consiste en un copolymère séquencé styrène-butadiène-styrène partiellement hydrogéné.

5. Matière adhésive selon au moins l'une quelconque des revendications précédentes,
**caractérisée en ce que**
la teneur en composants polyvinylaromatiques des copolymères séquencés P1 et P2 est chaque fois comprise entre 10 et 35 % en poids.

6. Matière adhésive selon au moins l'une quelconque des revendications précédentes,
**caractérisée en ce que**
la proportion des deux copolymères séquencés vinylaromatiques au total par rapport à la matière adhésive totale vaut de 20 à 70 % en poids, de préférence de 30 à 60 % en poids, de façon tout particulièrement préférée de 35 à 55 % en poids.

7. Matière adhésive selon au moins l'une quelconque des revendications précédentes,
**caractérisée en ce que**
la matière adhésive contient également des copolymères biséquencés.

8. Matière adhésive selon au moins l'une quelconque des revendications précédentes,
**caractérisée**
**en ce qu'**en plus des copolymères séquencés la matière adhésive contient des résines adhésives.

9. Matière adhésive selon au moins l'une quelconque des revendications précédentes,
**caractérisée en ce que**
la matière adhésive contient au moins un agent anti-UV.

10. Matière adhésive selon au moins l'une quelconque des revendications précédentes,
**caractérisée en ce que**
la matière adhésive contient d'autres composants de mélange, en particulier des plastifiants, des agents antivieillissement, des adjuvants de mise en oeuvre, des charges, des colorants, des azurants optiques, des stabilisants, des résines de renfort des séquences terminales.

11. Utilisation d'une matière autoadhésive selon au moins l'une quelconque des revendications précédentes, dans un ruban adhésif repositionnable pour l'extérieur.
